# EUROPÄISCHE PATENTSCHRIFT

(11) **EP 3 552 153 B1**
(45) Veröffentlichungstag und Bekanntmachung des Hinweises auf die Patenterteilung: **02.06.2021**
(21) Anmeldenummer: 17816607.0
(22) Anmeldetag: 04.12.2017
(51) Int. Cl.: G06K 19/07, G06K 19/077, A47G 19/00, A47G 19/02, A47G 19/22

(54) **VERFAHREN ZUM VERBINDEN EINES GESCHIRRTEILS MIT EINEM INFORMATIONSTRÄGER UND VORRICHTUNG MIT EINEM GESCHIRRTEIL UND EINEM INFORMATIONSTRÄGER**
METHOD FOR CONNECTING AN ITEM OF DISHWARE TO AN INFORMATION CARRIER, AND APPARATUS COMPRISING AN ITEM OF DISHWARE AND AN INFORMATION CARRIER
PROCÉDÉ DE RACCORDEMENT D'UNE PIÈCE DE VAISSELLE À UN SUPPORT D'INFORMATIONS ET DISPOSITIF POURVU D'UNE PIÈCE DE VAISSELLE ET D'UN SUPPORT D'INFORMATIONS

(30) Priorität: 06.12.2016 DE 102016123593
(43) Veröffentlichungstag der Anmeldung: 16.10.2019
(73) Patentinhaber: Rastal GmbH & Co. KG, 56203 Höhr-Grenzhausen (DE)
(72) Erfinder: NIERAAD, Thomas, 65719 Hofheim (DE); KEHREIN,Carsten, 56070 Koblenz (DE); BUSCH, Dietrich, 56130 Bad Ems (DE); LAMMEL, Michael, 52076 Aachen (DE); LEDERHOFER, Benjamin, 40764 Langefeld (DE)
(74) Vertreter: WSL Patentanwälte Partnerschaft mbB
(86) Internationale Anmeldenummer: PCT/EP2017/081399
(87) Internationale Veröffentlichungsnummer: WO 2018/104241

(56) Entgegenhaltungen:
- DE-A1-102005 038 004
- GB-A- 2 379 739

## Beschreibung

Die vorliegende Erfindung betrifft ein Verfahren zum Verbinden eines Geschirrteils mit einem berührungslos auslesbaren elektronischen Informationsträger mit den Schritten: Bereitstellen des Geschirrteils, wobei das Geschirrteil aus einem Material besteht, das ausgewählt wird aus einer Gruppe bestehend aus Glas, Keramik und Kunststoff oder einer Kombination davon, und Anbringen des Informationsträgers an dem Geschirrteil.

Darüber hinaus betrifft die vorliegende Anmeldung eine Vorrichtung mit einem Geschirrteil, das aus einem Material besteht, das ausgewählt ist aus einer Gruppe bestehend aus Glas, Keramik und Kunststoff oder einer Kombination davon, und einem an dem Geschirrteil angebrachten berührungslos auslesbaren elektronischen Informationsträger.

Aus dem Stand der Technik sind auf eine selbstklebende Trägerfolie aufgebrachte berührungslos auslesbare elektronische Informationsträger, insbesondere in Form von RFID-Transpondern, bekannt. Diese können auch auf ein Geschirrteil zur Identifizierung desselben aufgeklebt werden.

Allerdings weist eine derartige Lösung weder die häufig erwünschte Spülmaschinenbeständigkeit, noch einen wirksamen Schutz vor Manipulationen auf. Zudem genügt dieser Stand der Technik nicht den ästhetischen Ansprüchen an Gläser für den Ausschank von Markengetränken.

GB 2 379 739 B offenbart einen mit einem Laborgerät verbundenen Informationsträger, wobei der Informationsträger mit einer beschreibbaren Druckfarbe bedruckt ist.

Demgegenüber ist es Aufgabe der vorliegenden Erfindung, ein Verfahren zum Verbinden eines Geschirrteils mit einem berührungslos auslesbaren elektronischen Informationsträger sowie eine Vorrichtung mit einem Geschirrteil und einem daran befestigten Informationsträger bereitzustellen, die es ermöglichen, zumindest eines der zuvor genannten Kriterien zu erfüllen.

Zumindest eine der zuvor genannten Aufgaben wird durch ein Verfahren zum Verbinden eines Geschirrteils mit einem berührungslos auslesbaren elektronischen Informationsträger gelöst, welches die Schritte aufweist: Bereitstellen des Geschirrteils, wobei das Geschirrteil aus einem Material besteht, das ausgewählt wird aus einer Gruppe bestehend aus Glas, Keramik und Kunststoff oder einer Kombination davon, Anbringen des berührungslos auslesbaren elektronischen Informationsträgers an dem Geschirrteil und Aufbringen einer Deckschicht aus Druckfarbe derart, dass die Deckschicht eine Oberfläche des Informationsträgers zumindest abschnittsweise bedeckt und sich die Deckschicht über einem nicht von dem Informationsträger bedeckten Abschnitt an der Oberfläche des Geschirrteils erstreckt.

Die erfindungsgemäße Deckschicht aus Druckfarbe, welche sich sowohl über der Oberfläche des Informationsträgers selbst als auch über eine nicht von dem Informationsträger bedeckte Oberfläche des Geschirrteils erstreckt, bewirkt eine dauerhafte Versiegelung des Informationsträgers auf dem Geschirrteil. In Abhängigkeit von der Wahl der Druckfarbe verhindert die Deckschicht nicht nur ein Ablösen oder Beschädigen des Informationsträgers während der Nutzungszeit des Geschirrteils, sondern gewährleistet auch die geforderte Spülmaschinenbeständigkeit.

Unter einem Geschirrteil wird ein Gebrauchsgegenstand verstanden, welcher bei der Einnahme von Mahlzeiten verwendet wird. Insbesondere fallen gemäß der vorliegenden Erfindung Teller, Schüsseln, Platten sowie Trinkgefäße unter den Oberbegriff Geschirrteil.

Unter einem Trinkgefäß im Sinne der vorliegenden Erfindung wird ein Trinkgefäß unabhängig von der Wahl seines Materials verstanden. Bevorzugt ist jedoch ein Trinkgefäß aus Glas. Trinkgefäße im Sinne der vorliegenden Anmeldung umfassen Becher, Henkelartikel, wie Seidel, Tassen und Pitcher, Stilgefäße, aber auch Flaschen beziehungsweise Trinkflaschen.

Ein berührungslos auslesbarer elektronischer Informationsträger im Sinne der vorliegenden Erfindung umfasst in einer Ausführungsform ein Trägersubstrat, insbesondere ein Trägersubstrat aus Kunststoff. Zudem umfasst der Informationsträger in einer Ausführungsform eine elektronische Schaltung mit einem Sendeschaltkreis zum Abstrahlen eines Signals, einem Verarbeitungsschaltkreis und einem permanenten Speicher. Derartige elektronische Schaltungen sind aus dem Stand der Technik in mannigfaltiger Weise bekannt.

Dabei können einzelne Teile der elektronischen Schaltung in einem integrierten Schaltkreis, nämlich einem Chip, integriert sein. Ein Signal im Sinne der vorliegenden Erfindung kann ein elektrisches, ein magnetisches, ein elektromagnetisches oder ein optisches Signal sein. Bevorzugt sind jedoch Ausführungsformen, in denen das Signal auf ein magnetisches Feld oder ein elektromagnetisches Feld moduliert ist.

In einer Ausführungsform der Erfindung umfasst die elektronische Schaltung des Informationsträgers zusätzlich zu dem Schaltkreis auch einen Empfängerschaltkreis zum Empfangen eines Signals. Es versteht sich, dass auch dieser Empfängerschaltkreis dann mit dem Verarbeitungsschaltkreis verbunden ist.

In einer Ausführungsform der Erfindung sind der Sender- und/oder Empfängerschaltkreis analoge Schaltkreise. In einer weiteren Ausführungsform der Erfindung ist der Verarbeitungsschaltkreis ein digitaler Schaltkreis. Ein solcher digitaler Verarbeitungsschaltkreis ist in einer Ausführungsform ein Microcontroller.

In einer weiteren Ausführungsform weist die Schaltung zudem eine Antenne auf, welche mit dem Sender- und/oder Empfängerschaltkreis verbunden ist. Diese dient dazu, das Signal in Form eines magnetischen Feldes oder eines elektromagnetischen Feldes abzustrahlen oder zu empfangen.

In einer Ausführungsform der Erfindung ist die elektronische Schaltung ein RFID-Transponder. Eine Kopplung zwischen dem Lesegerät und einem solchen RFID-Transponder erfolgt in einer Ausführungsform der Erfindung entweder mit Hilfe eines magnetischen Wechselfeldes mit geringer Reichweite oder durch hochfrequente Radiowellen.

In einer Ausführungsform der Erfindung ist der RFID-Transponder ein Transponder nach dem NFC-Standard. Derartige Transponder lassen sich mit herkömmlichen mobilen Endgeräten, zum Beispiel einem Smartphone oder einem Tablet, auslesen und sind preiswert verfügbar.

Das Anbringen des Informationsträgers an dem Geschirrteil kann entweder unmittelbar auf einer Oberfläche des Geschirrteils oder mittelbar auf einer auf die Oberfläche des Geschirrteils aufgebrachten Schicht, insbesondere einer Schicht aus Druckfarbe, erfolgen.

Dabei ist der Begriff des Anbringens breit zu verstehen, da die eigentliche Verbindung mit dem Geschirrteil durch die Deckschicht aus Druckfarbe bereitgestellt wird. Insbesondere kann der Informationsträger in einer Ausführungsform lediglich aufgelegt werden. In einer Ausführungsform wird der Informationsträger aufgeklebt. In einer weiteren Ausführungsform werden Elemente des Informationsträgers auf das Geschirrteil oder auf eine Schicht auf Druckfarbe auf dem Geschirrteil aufgedruckt und/oder ein integrierter Schaltkreis auf das Geschirrteil oder eine Schicht aus Druckfarbe bestückt. In einer solchen Ausführungsform bildet das Material des Geschirrteils oder die Druckfarbe einer auf das Geschirrteil aufgebrachten Schicht selbst das Substrat des Informationsträgers.

Das Aufbringen der Deckschicht aus Druckfarbe umfasst in einer Ausführungsform der Erfindung ein Aufdrucken der Deckschicht und/oder ein Übertragen der Deckschicht in Form eines gedruckten Transferbilds.

Wird zum Aufbringen der Deckschicht aus Druckfarbe ein Übertragen der Deckschicht in Form eines gedruckten Transferbilds gewählt so wird in einer Ausführungsform zunächst ein das gewünschte Dekor auf ein Trägerpapier Größe aufgedruckt. Anschließend wird die fertig gedruckte Deckschicht nach Art eines Aufklebers oder Abziehbilds manuell auf das Geschirrteil und zumindest abschnittsweise über dem Informationsträger appliziert. Abschließend wird das applizierte Transferbild durch Wärmezufuhr (Tempern) ausgehärtet.

In einer Ausführungsform der Erfindung ist das Transferbild mit einem organischen Farbsystem bedruckt.

Demgegenüber wird unter einem Aufdrucken der Deckschicht ein direktes Bedrucken auf das Geschirrteil, auf den Informationsträger oder auf eine sonstige Materialschicht auf dem Geschirrteil verstanden. Bei diesem Aufdrucken wird die Druckfarbe jeweils von einer Bedruckvorrichtung, insbesondere einer Durmaschine wie einer Siebdruckmaschine, auf die jeweilige Fläche des Geschirrteils, des Informationsträgers oder einer sonstigen Materialschicht auf dem Geschirrteil ausgetragen.

Beim direkten Überdrucken des Informationsträgers mit der Deckschicht aus Druckfarbe ergeben sich vielfältige Herausforderungen, die mit Hilfe der vorliegenden Erfindung zu lösen sind.

Als problematisch erweist es sich, dass in nahezu allen Ausführungsformen der vorliegenden Erfindung mindestens zwei unterschiedliche Materialien, nämlich ein Material des Informationsträgers und ein Material des Geschirrteils oder ein auf das Geschirrteil aufgebrachtes oder aufgedrucktes Material zu überdrucken sind.

Zum anderen weist der Informationsträger in Ausführungsformen keine ebenen Oberflächen auf, sondern vielmehr gibt es zumindest einen Abschnitt des Informationsträgers, welcher gegenüber einer der Oberflächen des Informationsträgers vorspringt.

Insbesondere ist ein solcher vorspringender Abschnitt bei Ausführungsformen des Informationsträgers vorhanden, bei welchen die Antenne auf ein ebenes/ebenes Substrat aufgedruckt ist und ein integrierter Schaltkreis auf das Substrat aufgebracht ist, welcher die elektronische Schaltung umfasst. Dieser integrierte Schaltkreis springt dann als Abschnitt gegenüber der Oberfläche vor. Um einen ansprechenden ästhetischen Gesamteindruck zu erzeugen, muss die Druckfarbe die durch das Verspringen eines Abschnitts gegenüber der ansonsten ebenen Oberfläche entstehenden Kanten maskieren beziehungsweise abdecken.

Dazu bedeckt in einer Ausführungsform der Erfindung die Deckschicht die Oberfläche des Informationsträgers vollständig und die Druckfarbe der Deckschicht wird mit einer Dicke von mindestens 100 µm, vorzugsweise mit einer Dicke von mindestens 200 µm und besonders bevorzugt mit einer Dicke von mindestens 250 µm auf die Oberfläche des Informationsträgers aufgedruckt. Mit einer derartig dicken Deckschicht gelingt es, die Kanten gegenüber der Oberfläche der vorspringenden Abschnitte des Informationsträgers auszugleichen und die Beschichtung mit der Druckfarbe so aufzutragen, dass eine im Wesentlichen homogene und ebene Oberfläche der Deckschicht generiert wird.

Zu diesem Zweck muss in einer Ausführungsform die Viskosität der Druckfarbe so gewählt werden, dass sie zum Einen nach dem Aufdrucken ausreichend verläuft, um den geforderten Ausgleich der Kanten zu bewirken, zum Anderen muss die Viskosität aber so beschaffen sein, dass die Druckfarbe nicht von der bedruckten Fläche herunterläuft.

Um beide Bedingungen zu erfüllen, weist die Druckfarbe in einer Ausführungsform der Erfindung eine hohe Viskosität auf.

In einer weiteren Ausführungsform ist die Druckfarbe schnell trocknend. Dabei wird unter einer schnell trocknenden Druckfarbe im Sinne der vorliegenden Erfindung verstanden, dass die Farbe innerhalb von weniger als 30 Minuten, vorzugsweise innerhalb von weniger als 10 Minuten und besonders bevorzugt innerhalb von weniger als einer Minute bei Einstellen der entsprechenden Trocknungsparameter staubtrocken ist und die direkte Weiterverarbeitung, insbesondere eine Überdeckung mit einer weiteren Schicht aus Druckfarbe, erlaubt.

Die Deckschicht dient jedoch unabhängig von ihrer Herstellung nicht nur einer ästhetischen Überdeckung des Informationsträgers, sondern bewirkt auch eine Kapselung des Informationsträgers und damit einem Schutz vor äußeren Einwirkungen, wie beispielsweise durch kaltes oder warmes Spülwasser, auf den Informationsträger. Die Überdeckung des Informationsträgers mit Druckfarbe schützt diesen aufgrund der isolierenden Eigenschaften der Druckfarbe auch vor thermischen Einflüssen.

In einer Ausführungsform der Erfindung weist der Informationsträger eine erste und eine zweite Oberfläche auf, wobei ein Abschnitt des Informationsträgers, beispielsweise ein integrierter Schaltkreis, gegenüber der ersten Oberfläche vorspringt, wobei der Informationsträger derart an dem Geschirrteil angebracht wird, dass die Deckschicht mit der ersten Oberfläche und dem gegenüber der ersten Oberfläche vorspringenden Abschnitt des Informationsträgers in Eingriff ist.

In einer weiteren Ausführungsform der Erfindung wird ein Geschirrteil bereitgestellt, das einen Aufnahmeabschnitt für den Informationsträger in Form einer Vertiefung oder Nut in einer Oberfläche des Geschirrteils aufweist. Eine solche Ausführungsform ist zweckmäßig, da sie es ermöglicht, eine Oberfläche des Informationsträgers höhengleich mit der Oberfläche des Geschirrteils auszugestalten. Die Druckfarbe der Deckschicht muss in einer solchen Ausführungsform nur noch Unebenheiten und Kanten auf der Oberfläche des Informationsträgers, nicht aber die Dicke des Substrats des Informationsträgers selbst ausgleichen.

In einer weiteren Ausführungsform ist der Aufnahmeabschnitt in Form einer Nut oder Vertiefung derart ausgestaltet, dass er einen gegenüber der ersten Oberfläche vorspringenden Abschnitt des Informationsträgers aufnimmt. Geht man davon aus, dass in einer Ausführungsform der Informationsträger im Wesentlichen aus einem ebenen Substrat besteht, gegenüber dem jedoch auf der ersten Oberfläche der eigentliche Chip vorspringt, so kann in einer solchen Ausführungsform der Informationsträger mit seiner ersten Oberfläche an dem Geschirrteil aufgenommen werden, sodass sich der vorspringende Abschnitt des Informationsträgers in die Nut hinein erstreckt. Auf diese Weise wird dann mit der Deckschicht die zweite Oberfläche, die im Wesentlichen eben ist, überdeckt.

Grundsätzlich ist es für das erfindungsgemäße Verfahren zunächst unerheblich, an welcher Position auf dem Geschirrteil der Informationsträger und die Deckschicht vorgesehen sind. Es hat sich jedoch herausgestellt, dass es Positionen auf der Oberfläche eines Geschirrteils gibt, die eine besondere Eignung zur Aufnahme zumindest des Informationsträgers und der Deckschicht aufweisen.

Ist einer Ausführungsform der Erfindung das Geschirrteil ein Trinkgefäß, insbesondere ein Trinkglas, oder eine Flasche, so kann es zweckmäßig sein, wenn zumindest der Informationsträger und die Deckschicht im Bereich der Aufstandsfläche bzw. im Bereich des Bodens des Geschirrteils angeordnet sind. Da beispielsweise Gläser oder auch Flaschen immer wieder auf ihrer Aufstandsfläche abgestellt werden, kann auf diese Weise der Informationsträger einen definierten Abstand von einer Ausleseeinrichtung haben. Dabei ist eine solche Ausleseeinrichtung beispielsweise in eine Tischplatte eingelassen.

Bei Trinkgefäßen oder Flaschen mit einer konkav gekrümmten Aufstandsfläche bzw. mit einem konkav gekrümmten Boden kann die durch die Krümmung gebildete Kavität die Struktur aus zumindest dem Informationsträger und der Deckschicht aufnehmen, wobei das Trinkgefäß nach wie vor ohne zu verkippen auf einer die Struktur umgebenden Linie oder mehreren die Struktur umgebenden Punkten abgestellt werden kann.

In einer alternativen Ausführungsform werden zusätzlich zu der Struktur aus zumindest dem Informationsträger und der Deckschicht auf der Aufstandsfläche des Trinkgefäßes ein Standring oder mehrere Standpunkte aufgebracht, welche die Struktur umgeben. Dabei versteht es sich, dass der Standring oder die Standpunkte gegenüber der Oberfläche der Deckschicht vorspringen, um einen sicheren und festen, vorzugsweise verkippfreien, Stand des Geschirrteils zu ermöglichen.

Wie zuvor beschrieben umfasst das Aufbringen des Standrings oder der Standpunkte ein direktes Aufdrucken dieser Elemente auf das Geschirrteil oder eine mit dem Geschirrteil verbundene Schicht und/oder ein Übertragen des Standrings oder der Standpunkte in Form mindestens eines gedruckten Transferbilds.

In einer weiteren Ausführungsform der Erfindung weist das erfindungsgemäße Verfahren den Schritt auf, Aufbringen einer Trägerschicht aus Druckfarbe auf eine Oberfläche des Geschirrteils, wobei der Informationsträger dann auf der Trägerschicht angebracht wird. Auf diese Weise kann eine Struktur gebildet werden, bei welcher der Informationsträger vollständig von Druckfarbe umgeben ist, das heißt von der Druckfarbe umschlossen wird. Die Trägerschicht aus Druckfarbe dient aber auch dazu, den Informationsträger bei einem Befestigen an einem durchsichtigen Geschirrteil, beispielsweise einem Trinkgefäß aus Glas, für einen Betrachter, welcher durch den Abschnitt des Geschirrteils hindurchschaut, auf welchem der elektronische Informationsträger angebracht ist, zu verbergen. Auch das Aufbringen der Trägerschicht aus Druckfarbe umfasst wieder wahlweise ein Aufdrucken und/oder ein Übertragen der Trägerschicht in Form eines gedruckten Transferbilds.

Es versteht sich, dass in einer solchen Ausführungsform der Erfindung das Aufbringen der Trägerschicht vor dem Anbringen des Informationsträgers erfolgt und der Informationsträger auf der Trägerschicht angebracht wird und damit nicht unmittelbar mit dem Geschirrteil in Eingriff ist.

In einer Ausführungsform der Erfindung werden die Trägerschicht und die Deckschicht derart aufgebracht, dass eine Grundfläche des Informationsträgers kleiner ist als eine Fläche der Trägerschicht, wobei die Deckschicht derart aufgebracht wird, dass die Deckschicht die Trägerschicht zumindest abschnittsweise bedeckt.

In einer weiteren Ausführungsform der Erfindung weist der Informationsträger eine erste und eine zweite Oberfläche auf, wobei ein Abschnitt des Informationsträgers gegenüber der ersten Oberfläche vorspringt, wobei die Trägerschicht oder eine auf der Trägerschicht angeordnete Maskierungsschicht aus Druckfarbe derart aufgebracht werden, dass sie eine Ausnehmung aufweist und die erste Oberfläche des Informationsträgers derart mit der Trägerschicht oder der Maskierungsschicht in Eingriff gebracht wird, dass sich der gegenüber der ersten Oberfläche abspringende Abschnitt des Informationsträgers in die Aussparung erstreckt. Auch das Aufbringen der Maskierungsschicht aus Druckfarbe umfasst wieder wahlweise ein Aufdrucken der Maskierungsschicht und/oder ein Übertragen der Maskierungsschicht in Form eines gedruckten Transferbilds.

In einer Ausführungsform des erfindungsgemäßen Verfahrens weist dieses weiterhin den Schritt auf: Aufbringen eines Rahmens aus Druckfarbe auf die Oberfläche des Geschirrteils oder auf eine Trägerschicht aus Druckfarbe, sodass der Rahmen eine Fläche ausspart oder umschließt, die mindestens so groß ist wie eine Grundfläche des Informationsträgers bzw. seines Substrats, wobei die Deckschicht nach Einlegen des Informationsträgers in den Rahmen derart aufgedruckt wird, dass sie die Oberfläche des Informationsträgers und die Oberfläche des Rahmens jeweils zumindest abschnittsweise bedeckt. Auf diese Weise können die Kanten eines flächigen Informationsträgers von dem Rahmen kaschiert werden und die Bedruckung mit der Deckschicht aus Druckfarbe überdeckt eine im Wesentlichen ebene Oberfläche. Auch das Aufbringen des Rahmens aus Druckfarbe umfasst wieder wahlweise ein Aufdrucken des Rahmens und/oder ein Übertragen des Rahmens in Form eines gedruckten Transferbilds.

In einer Ausführungsform des Verfahrens bedeckt die Deckschicht den Rahmen vollständig.

In einer weiteren Ausführungsform der Erfindung wird der Rahmen mit einer Dicke aufgebracht, die im Wesentlichen gleich der Dicke des Informationsträgers ist.

Es versteht sich, dass in einer solchen Ausführungsform der Informationsträger zweckmäßigerweise erst nach dem Aufbringen und ggf. Aushärten des Rahmens an dem Geschirrteil angebracht wird.

Es versteht sich, dass dann, wenn der Rahmen auf eine Trägerschicht aufgebracht wird, das Aufbringen des Rahmens und der Trägerschicht auch gleichzeitig erfolgen kann, wobei dann die Dicke des Farbauftrags im Bereich der von dem Rahmen umschlossenen Fläche geringer ausfällt als im Bereich des Rahmens selbst.

In einer Ausführungsform der Erfindung erfolgt das Aufdrucken der Trägerschicht und/oder des Rahmens und/oder der Deckschicht in Siebdrucktechnik, wobei die Druckfarbe eine Siebdruckfarbe ist.

Es versteht sich, dass in einer alternativen Ausführungsform grundsätzlich das erfindungsgemäße Bedruckverfahren auch in Tampondrucktechnik mit einer Tampondruckfarbe ausgeführt werden könnte.

In einer Ausführungsform der Erfindung ist die Druckfarbe der Trägerschicht und/oder des Rahmens und/oder der Deckschicht eine organische Druckfarbe. Derartige organische Druckfarben erfordern nicht zwingenderweise eine Aushärtung durch Brennen der Farbe und können daher zur Beschichtung eingesetzt werden, auch wenn der Informationsträger, welcher temperaturempfindlich ist, bereits angebracht ist.

In einer Ausführungsform der Erfindung besteht eine solche organische Druckfarbe aus mindestens zwei Komponenten, wobei eine der Komponenten ein Härter ist. Bei derartigen Mehrkomponentendruckfarben lässt sich die Trocknungszeit einstellen und an die Bedruckung der hier in Rede stehenden Kombination aus Geschirrteil und Informationsträger anpassen.

In einer Ausführungsform der Erfindung ist die Druckfarbe der Trägerschicht und/oder des Rahmens und/oder der Deckschicht eine metallische Druckfarbe oder eine metallische Ersatzfarbe.

In einer Ausführungsform des erfindungsgemäßen Verfahrens wird nur die Deckschicht nach dem Anbringen des Informationsträgers aufgedruckt oder in Form eines Transferbilds auf gebracht. Daher können alle anderen Schichten aus Druckfarben, insbesondere die Trägerschicht und/oder der Rahmen in einer Ausführungsform auch in einer Druckfarbe aufgebracht werden, welche ein Brennen erfordert. Auf diese Weise können für die Trägerschicht und/oder den Rahmen die Vorzüge von gebrannten Druckfarben, insbesondere ihre hohe Abriebfestigkeit und Spülmaschinenbeständigkeit, genutzt werden. Geeignet sind dafür insbesondere keramische Druckfarben.

In einer Ausführungsform des erfindungsgemäßen Verfahrens wird die Druckfarbe durch Einwirkung von UV-Strahlung auf das Geschirrteil mit dem Informationsträger und der Druckfarbe ausgehärtet. In einer weiteren Ausführungsform wird die Druckfarbe durch Erwärmen der Druckfarbe auf eine Temperatur von 70° Celsius oder weniger, vorzugsweise von 60° Celsius oder weniger und besonders bevorzugt von 50° C oder weniger ausgehärtet. Ein solches Aushärten ohne ein Brennen bei Temperaturen oberhalb von 70° C ermöglicht es, den Informationsträgerwie beschrieben mit der der Deckschicht aus Druckfarbe zu versiegeln.

In einer Ausführungsform des erfindungsgemäßen Verfahrens wird die Trägerschicht und/oder der Rahmen und/oder die Deckschicht mit einem Druckkopf einer Bedruckvorrichtung aufgedruckt, wobei der Druckkopf und das Geschirrteil relativ gegeneinander bewegbar sind, wobei nach dem Anbringen des Informationsträgers und vor dem Aufdrucken der Deckschicht der Druckkopf mit den Schritten positioniert wird:
Auslesen des Informationsträgers mit einer Ausleseeinrichtung,
Erfassen einer Signalstärke eines vom dem Informationsträger an die Ausleseeinrichtung übertragenen Signals,
Bestimmen einer Position des Informationsträgers relativ zu der Ausleseeinrichtung aus der Signalstärke,
Verändern der Position des Informationsträgers durch Bewegen des Geschirrteils mit dem Informationsträger relativ zu der Ausleseeinrichtung, sodass sich der mit der Deckschicht zu überdruckende Bereich unter dem Druckkopf befindet.

Auf diese Weise wird der bereits an dem Geschirrteil angebrachte Inforationsträger als Passerung eingesetzt. Diese Ausführungsform des erfindungsgemäßen Verfahrens beruht dabei darauf, dass die Signalstärke eines von dem Informationsträger abgestrahlten und von der Ausleseeinrichtung empfangenen Signals vom Abstand zwischen dem Informationsträger und der Ausleseeinrichtung abhängt.

Viele Geschirrteile, insbesondere Trinkgefäße, weisen eine Rotationssymmetrie auf. Während sich der Abstand des Informationsträgers von einer Aufstandfläche des Geschirrteils im Produktionsprozess gut festlegen lässt, sodass der Abstand des Informationsträgers nach dem Anbringen immer den gleichen Abstand von einer Aufstandfläche des Geschirrteils, beispielsweise dem Fuß eines Trinkgefäßes, hat, muss die Positionierung in Umfangsrichtung immer exakt bestimmt werden, um eine Bedruckung des Informationsträgers mit der Deckschicht aus Druckfarbe zu gewährleisten.

Insbesondere in einer Ausführungsform der Erfindung, bei welcher das Geschirrteil eine Rotationssymmetrie aufweist, lässt sich durch Drehen des Geschirrteils relativ zu dem Druckkopf und gleichzeitigem Erfassen der Signalstärke eines von dem Informationsträger ausgesandten Signals die absolute Position des Signalträgers relativ zum Druckkopf bestimmen und der Druckkopf dabei oder nachfolgend exakt in eine Bedruckposition zum Aufbringen der Deckschicht bringen.

Die vorliegende Erfindung betrifft daher darüber hinaus auch eine Bedruckvorrichtung zum Bedrucken eines Geschirrteils mit einem Druckkopf und einer Ausleseeinrichtung, die derart eingerichtet ist, dass sie in einem Betrieb der Bedruckvorrichtung einen an einem Geschirrteil angeordneten Informationsträger berührungslos ausliest. Eine solche Bedruckvorrichtung ist geeignet, um die zuvor beschriebene Ausführungsform des erfindungsgemäßen Verfahrens zum Bedrucken eines Geschirrteils auszuführen und die erforderliche Passerung mit Hilfe des Informationsträgers bereitzustellen.

Darüber hinaus ist es auf diese Weise möglich, noch während des Bedruckens des Geschirrteils zum Einen den angebrachten Informationsträger auf Funktionstüchtigkeit zu überprüfen, zum Anderen aber die eindeutige Identifikation des Geschirrteils, die von dem Informationsträger bereitgestellt wird, in einer Datenbank abzulegen.

Dabei ist in einer Ausführungsform der Erfindung die Ausleseeinrichtung an dem Druckkopf angeordnet. Insbesondere ist es zweckmäßig, dass die Ausleseeinrichtung so angeordnet ist, dass dann, wenn die Signalstärke des von dem Informationsträger abgestrahlten und von der Ausleseeinrichtung empfangenen Signals maximal ist, der Druckkopf an der Position angeordnet ist, an der er mit dem Aufdrucken der Deckschicht beginnen kann.

In einer Ausführungsform der Erfindung weist die Bedruckvorrichtung zudem eine Steuerung auf, die so eingerichtet ist, dass sie im Betrieb der Bedruckvorrichtung das erfindungsgemäße Verfahren zum Aufdrucken der Deckschicht auf eine Oberfläche des Informationsträgers ermöglicht.

Zumindest eine der oben genannten Aufgaben wird auch gelöst durch eine Vorrichtung mit einem Geschirrteil, das aus einem Material besteht, das ausgewählt ist aus einer Gruppe bestehend aus Glas, Keramik und Kunststoff oder einer Kombination davon, und einem an dem Geschirrteil angebrachten berührungslos auslesbaren elektronischen Informationsträger, wobei die Vorrichtung eine Deckschicht aus Druckfarbe aufweist und wobei die Deckschicht eine Oberfläche des Informationsträgers zumindest abschnittsweise bedeckt und sich die Deckschicht über einem nicht von dem Informationsträger bedeckten Abschnitt der Oberfläche des Geschirrteils erstreckt.

Es versteht sich, dass die Druckfarbe der Deckschicht in dem nicht von dem Informationsträger bedeckten Abschnitt der Oberfläche des Geschirrteils entweder unmittelbar in Eingriff mit der Oberfläche des Geschirrteils ist oder aber sich eine weitere Schicht aus Druckfarbe zwischen der Oberfläche des Geschirrteils und der Deckschicht erstreckt.

Sämtliche Merkmale, wie sie durch das zuvor beschriebene Verfahren auf dem Geschirrteil mit Schichten aus Druckfarbe erzeugt werden, können in einer Ausführungsform als entsprechendes Elemente an beziehungsweise auf dem Geschirrteil der beanspruchten Vorrichtung vorgesehen sein.

Lediglich der Kürze und der Lesbarkeit der Beschreibung wegen wird darauf verzichtet, die einzelnen Merkmale der Schichten aus Druckfarbe hier noch einmal für die mit dem Verfahren erzeugte Vorrichtung zu wiederholen. Soweit zuvor Aspekte der Erfindung im Hinblick auf das Verfahren beschrieben wurden, so gelten diese auch für die entsprechende Vorrichtung mit einem Geschirrteil und einem Informationsträger. Insbesondere aber sind Ausführungsformen des erfindungsgemäßen Verfahrens zum Herstellen der erfindungsgemäßen Vorrichtung geeignet.

Weitere Vorteile, Merkmale oder Anwendungsmöglichkeiten der vorliegenden Erfindung werden anhand der folgenden Beschreibung von Ausführungsformen und der dazugehörigen Figuren deutlich.
- Figur 1: ist eine schematische Querschnittsansicht eines Trinkglases mit einem damit verbundenen Informationsträger gemäß einer Ausführungsform der vorliegenden Erfindung.
- Figur 2: ist eine schematische Querschnittsansicht eines Informationsträgers gemäß einer ausführungsform der vorliegenden Erfindung.
- Figur 3: ist eine weggebrochene schematische Querschnittsansicht eines Trinkglases mit einem Informationsträger gemäß einer ersten Ausführungsform der vorliegenden Erfindung.
- Figur 4: ist eine weggebrochene schematische Querschnittsansicht eines Trinkglases mit einem Informationsträger gemäß einer zweiten Ausführungsform der vorliegenden Erfindung.
- Figur 5: ist eine weggebrochene schematische Querschnittsansicht eines Trinkglases mit einem Informationsträger gemäß einer dritten Ausführungsform der vorliegenden Erfindung.
- Figuren 6a) bis 6e): sind schematische Darstellungen der Schritte eines Verfahrens zum Befestigen eines Informationsträgers an einem Geschirrteil gemäß einer Ausführungsform der vorliegenden Erfindung.
- Figur 7: ist eine weggebrochene schematische Querschnittsansicht eines Trinkglases mit einem Informationsträger gemäß einer vierten Ausführungsform der vorliegenden Erfindung.
- Figur 8: ist eine weggebrochene schematische Querschnittsansicht eines Trinkglases mit einem Informationsträger gemäß einer fünften Ausführungsform der vorliegenden Erfindung.
- Figur 9: ist eine schematische Querschnittsansicht durch eine Bedruckvorrichtung gemäß einer Ausführungsform der vorliegenden Erfindung.

In den Figuren sind gleiche Elemente mit gleichen Bezugszeichen bezeichnet.

Für die nachfolgend beschriebenen Ausführungsformen der vorliegenden Erfindung wird davon ausgegangen, dass ein Informationsträger 2 mit einem Trinkglas 1 verbunden ist. Die Kombination aus Trinkglas 1 und Informationsträger 2 bildet die erfindungsgemäße Vorrichtung. Ein Trinkglas, nachfolgend kurz auch als Glas bezeichnet, bildet ein Beispiel für ein Geschirrteil im Sinne der vorliegenden Anmeldung.

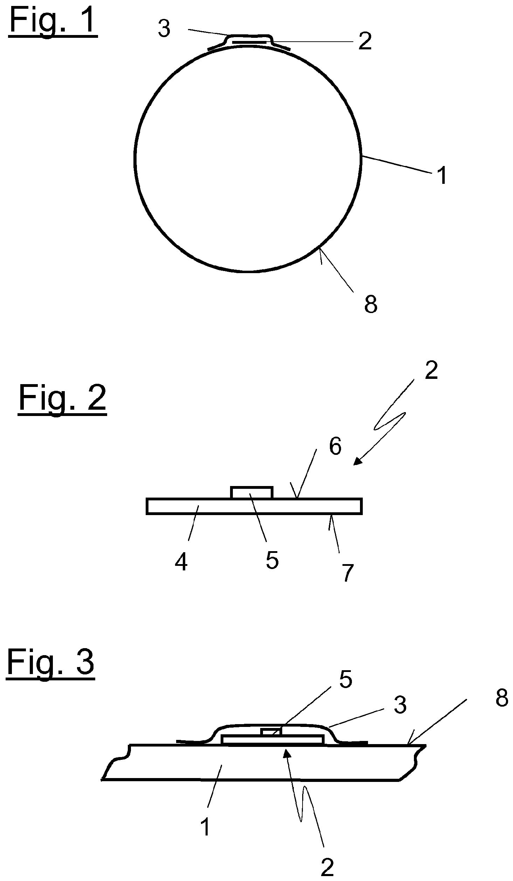

Figur 1 zeigt eine schematische Querschnittsansicht durch ein solches Trinkglas 1 mit einem darauf angebrachten Informationsträger 2, welcher von einer Deckschicht 3 aus Druckfarbe abgedeckt, von dieser geschützt und mit dem Trinkglas 1 verbunden ist. Die schematische Querschnittsansicht aus Figur 1 verdeutlicht unabhängig von der konkreten Ausgestaltung der Kapselung des Informationsträgers die Positionierung des Informationsträgers 2 an dem Trinkglas 1. Die Positionierung ist für alle gemäß den Figuren 2 bis 7 gezeigten Ausführungsformen die gleiche.

Die nachfolgend diskutierten Figuren 3 bis 8 zeigen vergrößerte Ausschnitte aus der schematischen Darstellung der Figur 1 im Bereich des Transponders 2. In den Querschnittsansichten der Figuren 3-8 ist das Glas beziehungsweise seine Oberfläche als ebene Form dargestellt. Dies erscheint auf der aufgrund der starken Vergrößerung des Ausschnitts gerechtfertigt. Tatsächlich ist aber die Glasoberfläche 8 aller Ausführungsformen wie in Figur 1 gezeigt gekrümmt.

Bei dem hier betrachteten Informationsträger handelt es sich um einen RFID-Transponder, so wie er schematisch in der Querschnittsansicht aus Figur 2 gezeigt ist. Der Transponder 2 umfasst eine planare, auf ein ebenes Substrat 4 aufgedruckte Antennenstruktur (in den Figuren nicht gezeigt) und einen in einem Chip 5 integrierten Verarbeitungsschaltkreis. Aufgrund der Bauform springt der Chip 5 gegenüber der ersten Oberfläche 6 der ansonsten ebenen Struktur des Substrats hervor. Die zweite Oberfläche 7 des Transponders 2 hingegen ist vollständig eben und weist keine Vorsprünge auf.

Die Darstellung aus Figur 2 verdeutlicht bereits eine der erfindungsgemäß gelösten Herausforderungen, nämlich die Unebenheit beziehungsweise die Kanten, welche durch den gegenüber der ersten Oberfläche 6 vorspringenden Chip 5 gebildet werden, zu kaschieren und den Chip vor einem Abreißen zu schützen.

In der ersten, vergleichsweise einfachen Ausführungsform der erfindungsgemäßen Vorrichtung aus Figur 3 ist der Chip unmittelbar auf der Oberfläche 8 des Glases 1 angebracht. In der dargestellten Ausführungsform ist der Transponder 2 mit einer selbstklebenden Folie versehen, sodass seine zweite Oberfläche 7 zunächst mit der Glasoberfläche 8 verklebt wird.

Nach dem Aufkleben des Transponders 2 wird das Glas 1 im Bereich des Transponders 2 mit einer Deckschicht 3 aus einer Glasfarbe bedruckt. Dies gestaltet sich aus mehreren Gründen als schwierig. Zum einen müssen zwei unterschiedliche Materialien mit der gleichen Glasfarbe der Deckschicht 3 bedruckt werden, nämlich zum einen das Glasmaterial des Trinkglases 1, zum anderen das Kunststoffmaterial des Transponders 2. Zudem kann die Glasfarbe 3 nicht in einem nachfolgenden Arbeitsschritt gebrannt werden, da ansonsten der Transponder 2 beschädigt würde. Daher wurde die Glasfarbe für die Deckschicht 3 der Ausführungsform aus Figur 3, aber auch für die Deckschichten 3 aller weiteren Ausführungsformen gemäß den anderen Figuren sorgsam ausgewählt.

Zudem muss die Glasfarbe in den Ausführungsformen der Figuren 3 bis 6 die vergleichsweise dicke Struktur des Transponders 2 überdecken und die Oberflächenstruktur auf der zweiten Oberfläche 6, welche durch den vorspringenden Chip 5 hervorgerufen wird, einebnen. Anderenfalls würde kein ästhetisch anmutendes Druckbild der Deckschicht 3 erzeugt.

Daher wurde als Deckschicht 3 eine organische Zweikomponentenglasfarbe mit einer Farbkomponente und einem Härter gewählt. Diese weist den Vorteil auf, dass sie vergleichsweise schnell durch Erwärmen der Struktur aus Glas 1, Transponder 2 und Deckschicht 3 ausgehärtet wird, aber ohne ein Brennen auskommt. In der dargestellten Ausführungsform ist die Glasfarbe der Deckschicht 3 so gewählt, dass sie bei entsprechender Erwärmung auf eine Temperatur von 65° C innerhalb von 30 Sekunden staubtrocken härtet.

Dies stellt sich insbesondere deshalb als Herausforderung heraus, da die Deckschicht 3 den gesamten Transponder mit einer Dicke von 200 µm überdecken muss. In anderen Worten ausgedrückt hat die Farbschicht eine Dicke von bis zu 250 µm.

Darüber hinaus gilt es, die Druckfarbe so zu wählen, dass die Farbe eine hohe Viskosität aufweist, um ein Herunterlaufen der Farbe nach dem Aufdrucken und vor dem Trocknen von der Struktur des Transponders 2 zu verhindern.

Die Ausführungsform der erfindungsgemäßen Vorrichtung aus Figur 3 eignet sich insbesondere für gefärbte Gläser. Will man hingegen bei transparenten Gläsern verhindern, dass ein Betrachter durch das transparente Material des Glases 1 hindurch auf den Transponder 2 blicken kann, so muss der Transponder auf eine intransparente Trägerschicht aufgebracht werden.

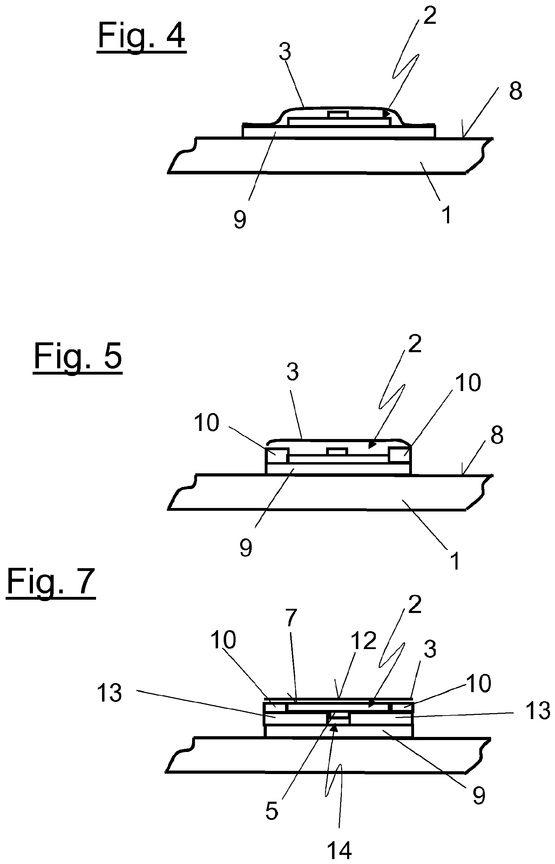

Ausführungsformen der erfindungsgemäßen Vorrichtung mit einer solchen Trägerschicht sind in den Figuren 4-6 gezeigt. Die Trägerschicht wird in einem ersten Schritt auf die Oberfläche 8 des Glases 1 aufgedruckt. Die Fläche in den Figuren 4-8 der mit dem Bezugszeichen 9 bezeichneten Trägerschicht wird so gewählt, dass sie auf allen Seiten größer ist als die Grundfläche des Transponders 2. Bei einer derartigen Wahl der Fläche der Trägerschicht 9 kann die Deckschicht 3 so aufgedruckt werden, dass sie nur mit der Trägerschicht 9, nicht aber mit der Oberfläche 8 des Glases in Eingriff ist. Dies erleichtert die Wahl der Druckfarbe für die Deckschicht 3.

Da die Trägerschicht 9 vor dem Anbringen des Transponders 2 an der Struktur auf das Glas 1 aufgedruckt wird, besteht die Möglichkeit, die Druckfarbe für die Trägerschicht 9 ohne die Einschränkungen zu wählen, die bei der Auswahl der Druckfarbe für die Deckschicht 3 zu berücksichtigen sind. Insbesondere kann für die Trägerschicht 9 wie in den dargestellten Ausführungsformen eine Keramikfarbe gewählt werden, die nach dem Drucken zum vollständigen Aushärten gebrannt werden muss.

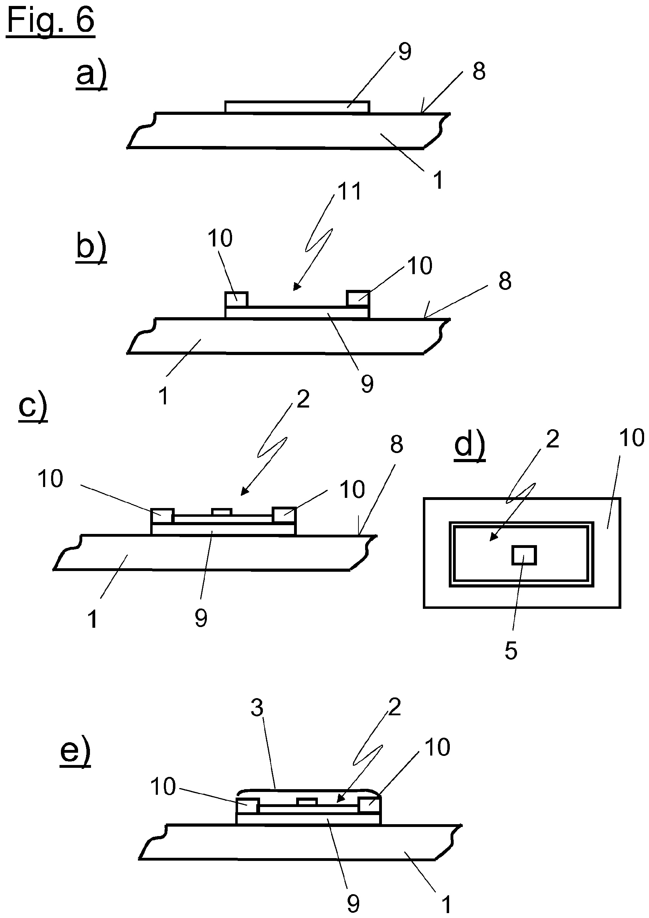

Figur 5 zeigt eine Ausführungsform, bei welcher durch die Bedruckung des Glases 1 ein Bauraum aus Druckfarbe zur Aufnahme des Transponders 2 bereitgestellt wird. Um den Aufbau der in Figur 5 dargestellten Struktur zu verdeutlichen, werden in Figur 6 die einzelnen Verfahrensschritte beim Erzeugen der Struktur, so wie sie nacheinander ausgeführt werden, erläutert. Alle Bedruckschritte, so wie sie schematisch aufeinanderfolgend in Figuren 6a-6e dargestellt sind, werden im Siebdruckverfahren ausgeführt.

Zunächst wird auf die Oberfläche 8 des Glases 1 eine Trägerschicht 9 aus einer keramischen Druckfarbe aufgedruckt. In einem zweiten Bedruckschritt wird auf die Trägerschicht 9 ein Rahmen 10 ebenfalls aus einer keramischen Druckfarbe aufgedruckt. Diese keramische Farbe weist den Vorteil auf, dass sie eine hohe Widerstandsfähigkeit gegenüber mechanischen Beschädigungen, aber auch eine hohe Spülmaschinenbeständigkeit aufweist. Da das Aufdrucken der Trägerschicht 9 und des Rahmens 10 vor dem Anbringen des Transponders 2 erfolgt, kann die keramische Farbe vor dem Anbringen des Transponders 2 bei Temperaturen über 70° C gebrannt werden, um vollständig auszuhärten und um ihre herausragenden chemischen und mechanischen Eigenschaften zu erhalten.

Nach dem Brennen der Trägerschicht 9 und des Rahmens 10 wird der Transponder 2 in den von dem Rahmen 10 definierten Bauraum 11 eingebracht. Figur 6c) zeigt eine Querschnittsansicht durch die Struktur mit dem Transponder 2, während Figur 6d) eine Draufsicht von oben auf die Struktur zeigt. Die von dem Rahmen 10 umschlossene Fläche ist gerade so gewählt, dass die Grundfläche des Substrats 4 des Transponders 2 in diesem Rahmen 10 vollständig aufgenommen werden kann.

Die Höhe des Rahmens 10 ist so gewählt, dass sie ein bisschen höher ist als die Dicke des Substrats 4 des Transponders 2. In einem abschließenden Verfahrensschritt wird die Deckschicht 3 auf den Transponder 2 und den Rahmen 10 aufgedruckt. Durch diese Anordnung der verschiedenen Farbschichten entsteht eine im Wesentlichen dem Verlauf der Oberfläche 8 des Glases 1 folgende stetige Fläche 12. Die so geschaffene Struktur genügt hohen ästhetischen Ansprüchen, während sie gleichzeitig in idealer Weise den Transponder 2 mit dem Glas 1 verbindet und den Transponder 2 schützt.

Die Ausführungsform der Figur 7 unterschiedet sich von der Ausführungsform gemäß den Figuren 5 und 6 dadurch, dass zwischen der Trägerschicht 9 und dem Rahmen 10 eine Maskierungsschicht 13 vorgesehen ist. Diese dient dazu, den Chip 5 des Transponders 2 in einer Ausnehmung 14 aufzunehmen. Verglichen mit den Ausführungsformen der Figuren 3-5 ist in dieser Variante der Chip herumgedreht, sodass statt seiner ersten Oberfläche 6 eine zweite Oberfläche 7 mit der Deckschicht 3 in Eingriff ist. Auch auf diese Weise kann die Ebenheit der Oberfläche 12 der Deckschicht 3 weiter gesteigert werden.

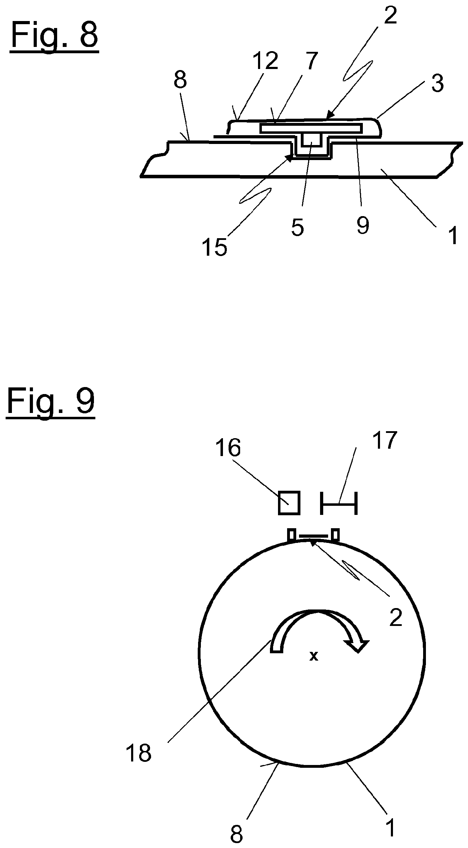

In der alternativen Ausführungsform aus Figur 8 weist das Glas 1 selbst eine Vertiefung 15 auf, die zur Aufnahme des Chips 5 des Transponders 2 dient. Wie zuvor in Figur 7 wird der Transponder derart angebracht, dass die Deckschicht 3 mit der zweiten Oberfläche 7 des Transponders in Eingriff ist. Diese Ausführungsform verzichtet auf den Rahmen der Ausführungsformen gemäß den Figuren 5-7.

Figur 9 zeigt schematisch das Glas 1 in einer Bedruckvorrichtung. Die Bedruckvorrichtung umfasst einen Siebdruckkopf 17 sowie eine RFID-Leseeinrichtung 16. Nach dem Aufdrucken der Trägerschicht 9 auf das Glas 1 und gegebenenfalls weitere Schichten sowie nach dem Anbringen des Transponders 2 stellt der Transponder 2 eine Passerung bereit. Diese ermöglicht es, die Deckschicht 3 genau über dem Transponder 2 aufzudrucken.

Wenn mit der Siebdruckbedruckvorrichtung nacheinander eine große Zahl von Gläsern bedruckt wird, kann die Position des Druckkopfes 15 in axialer Richtung des Glases 1 konstant eingestellt werden. Die Maschine weist dann eine Anschlagfläche für die Aufstandsfläche beziehungsweise den Fuß des Glases 1 auf. Damit ist die axiale Position oder Höhe des Transponders 2 und damit die Bedruckposition in axialer Richtung festgelegt. Allerdings gilt es, den Druckkopf 15 in Umfangsrichtung so zu positionieren, dass mit dem Bedruckprozess der Transponder 2 überdruckt wird. Dazu wird erfindungsgemäß mit Hilfe der Ausleseeinrichtung 16 ein Signal aus dem Transponder 2 ausgelesen. Dann, wenn die Signalstärke maximal ist, befindet sich der Transponder 2 direkt unter der Ausleseeinrichtung 16 und weist einen minimalen Abstand zur Ausleseeinrichtung auf. Sind, wie in Figur 9 schematisch dargestellt, der Druckkopf 15 und die Ausleseeinrichtung 16 unmittelbar nebeneinander angeordnet, so kann jetzt mit dem Bedrucken begonnen werden, da sichergestellt ist, dass sich der Druckkopf 15 direkt über dem Transponder beziehungsweise unmittelbar daneben befindet. Zum Einrichten und Maximieren des von der Ausleseeinrichtung 16 empfangenen Signals wird das Glas 1 um seine Achse gedreht, wie durch den Pfeil 18 angedeutet.

Gleichzeitig kann durch die Anordnung der Ausleseeinrichtung 16 neben dem Druckkopf 15 ein Funktionstest des Transponders 2 unmittelbar vor und/oder nach dem Bedrucken mit der Deckschicht erfolgen. Darüber hinaus kann zu diesem Zeitpunkt eindeutig die Identifikation, welche der Transponder 2 bereitstellt, in einer Datenbank dem Glas zugeordnet werden. Insbesondere kann das Herstellungsdatum und die Charge der eindeutigen Identifikation zugeordnet werden.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Merkmalen beansprucht sind, schließt ihre Kombination nicht aus. Bezugszeichen in den Ansprüchen sind nicht als Beschränkung des Schutzbereichs gedacht.

### Bezugszeichenliste

- 1: Trinkglas
- 2: RFID-Transponder
- 3: Deckschicht
- 4: Substrat
- 5: Chip
- 6: erste Oberfläche
- 7: zweite Oberfläche
- 8: Glasoberfläche
- 9: Trägerschicht
- 10: Rahmen
- 11: Bauraum
- 12: Fläche
- 13: Maskierungsschicht
- 14: Ausnehmung
- 15: Vertiefung
- 16: RFID-Leseeinrichtung
- 17: Siebdruckkopf
- 18: Pfeil

## Patentansprüche

1. Verfahren zum Verbinden eines Geschirrteils (1) mit einem berührungslos auslesbaren elektronischen Informationsträger (2) mit den Schritten
Bereitstellen des Geschirrteils (1), wobei das Geschirrteil (1) aus einem Material besteht, dass ausgewählt wird aus einer Gruppe bestehend aus Glas, Keramik und Kunststoff oder einer Kombination davon, und
Anbringen des Informationsträgers (2) an dem Geschirrteil (1),
**dadurch gekennzeichnet, dass** das Verfahren weiterhin den Schritt aufweist
Aufbringen einer Deckschicht (3) aus Druckfarbe derart, dass die Deckschicht eine Oberfläche des Informationsträgers (2) zumindest abschnittsweise bedeckt und sich die Deckschicht (3) über einem nicht von dem Informationsträger (2) bedeckten Abschnitt einer Oberfläche des Geschirrteils (1) erstreckt.

2. Verfahren nach Anspruch 1, **dadurch gekennzeichnet, dass** das Aufbringen der Deckschicht (3) ein Aufdrucken der Deckschicht (3) oder ein Übertragen der Deckschicht (3) in Form eines gedruckten Transferbilds umfasst.

3. Verfahren nach Anspruch 1 oder 2, **dadurch gekennzeichnet, dass** die Druckfarbe der Deckschicht (3) mit einer Dicke von mindestens 100 µm, vorzugsweise mit einer Dicke von mindestens 200 µm und besonders bevorzugt mit einer Dicke von mindestens 250 µm auf die Oberfläche des Informationsträgers (2) aufgedruckt wird.

4. Verfahren nach einem der vorhergehenden Ansprüche, **dadurch gekennzeichnet, dass** der Informationsträger (2) eine erste und eine zweite Oberfläche (6, 7) aufweist, wobei ein Abschnitt des Informationsträgers (2) gegenüber der ersten Oberfläche (6) vorspringt, wobei der Informationsträger (2) derart an dem Geschirrteil (1) angebracht wird, dass die Deckschicht (3) mit der ersten Oberfläche (6) und dem gegenüber der ersten Oberfläche (6) vorspringenden Abschnitt des Informationsträgers (2) in Eingriff ist.

5. Verfahren nach einem der vorhergehenden Ansprüche, **dadurch gekennzeichnet, dass** ein Geschirrteil (1) bereitgestellt wird, das einen Aufnahmeabschnitt zumindest für einen Abschnitt des Informationsträgers (2) in Form einer Vertiefung (15) oder Nut in der Oberfläche des Geschirrteils (1) aufweist.

6. Verfahren nach einem der vorhergehenden Ansprüche, **dadurch gekennzeichnet, dass** das Verfahren weiterhin den Schritt aufweist, Aufbringen einer Trägerschicht (9) aus Druckfarbe auf eine Oberfläche des Geschirrteils (1), wobei der Informationsträger (2) auf die Trägerschicht (9) aufgebracht wird.

7. Verfahren nach einem der vorhergehenden Ansprüche, **dadurch gekennzeichnet, dass** eine Grundfläche des Informationsträgers (2) kleiner ist als eine Fläche der Trägerschicht (9), wobei die Deckschicht (3) derart aufgebracht wird, dass die Deckschicht (3) die Trägerschicht (9) zumindest abschnittsweise bedeckt.

8. Verfahren nach einem der vorhergehenden Ansprüche, **dadurch gekennzeichnet, dass** das Verfahren weiterhin den Schritt aufweist
Aufbringen eines Rahmens (10) aus Druckfarbe auf die Oberfläche des Geschirrteils (1) oder auf eine Trägerschicht (9) aus Druckfarbe, so dass der Rahmen (10) eine Fläche ausspart, die mindestens so groß ist wie eine Grundfläche des Informationsträgers (2),
wobei die Deckschicht (3) derart aufgebracht wird, dass sie die Oberfläche des Informationsträgers (2) und die Oberfläche des Rahmens (10) jeweils zumindest abschnittsweise bedeckt.

9. Verfahren nach einem der vorhergehenden Ansprüche, **dadurch gekennzeichnet, dass** die Deckschicht (3) den Rahmen (10) vollständig bedeckt.

10. Verfahren nach einem der vorhergehenden Ansprüche, **dadurch gekennzeichnet, dass** das Aufbringen der Trägerschicht (9) und/oder des Rahmens (10) und/oder der Deckschicht (3) durch Aufdrucken in Siebdrucktechnik erfolgt, wobei die Druckfarbe eine Siebdruckfarbe ist.

11. Verfahren nach einem der vorhergehenden Ansprüche, **dadurch gekennzeichnet, dass** die Druckfarbe der Trägerschicht (9) und/oder des Rahmens (10) eine keramische Druckfarbe ist, wobei nach dem Aufbringen der Trägerschicht (9) und/oder des Rahmens (10) und vor dem Anbringen des Informationsträgers (2) die keramische Druckfarbe gebrannt wird.

12. Verfahren nach einem der vorhergehenden Ansprüche, **dadurch gekennzeichnet, dass** die Druckfarbe der Trägerschicht (9) und/oder des Rahmens (10) und/oder der Deckschicht (3) eine organische Druckfarbe ist.

13. Verfahren nach einem der vorhergehenden Ansprüche, **dadurch gekennzeichnet, dass** die Druckfarbe ausgehärtet wird durch Einwirkung von UV-Strahlung und/oder durch Erwärmen der Druckfarbe auf eine Temperatur von 70° C oder weniger, vorzugsweise von 60° C oder weniger und besonders bevorzugt von 50° C oder weniger.

14. Verfahren nach einem der vorhergehenden Ansprüche, **dadurch gekennzeichnet, dass** die Deckschicht (3) mit einem Druckkopf (15) einer Bedruckvorrichtung aufgedruckt wird, wobei der Druckkopf (15) und das Geschirrteil (1) relativ gegeneinander bewegbar sind, wobei nach dem Anbringen des Informationsträgers (2) und vordem Aufdrucken der Deckschicht (3) eine Position des Druckkopfes (15) relativ zu dem Informationsträger (2) mit den Schritten eingestellt wird
Auslesen des Informationsträgers (2) mit einer Ausleseeinrichtung (16),
Erfassen einer Signalstärke eines von dem Informationsträger (2) an die Ausleseeinrichtung (16) übertragenen Signals,
Bestimmen einer Position des Informationsträgers (2) relativ zu der Ausleseeinrichtung (16) aus der Signalstärke,
Verändern der Position des Informationsträgers (2) durch Bewegen des Geschirrteils (1) mit dem Informationsträger (2) relativ zu der Ausleseeinrichtung (16), so dass sich der mit der Deckschicht (3) zu überdruckende Bereich unter dem Drucckopf (15) befindet.

15. Vorrichtung mit
einem Geschirrteil (1), das aus einem Material besteht, dass ausgewählt ist aus einer Gruppe bestehend aus Glas, Keramik und Kunststoff oder einer Kombination davon, und
einem an dem Geschirrteil (1) angebrachten berührungslos auslesbaren elektronischen Informationsträger (2),
**dadurch gekennzeichnet, dass**
die Vorrichtung eine Deckschicht (3) aus Druckfarbe aufweist,
wobei die Deckschicht (3) eine Oberfläche des Informationsträgers (2) zumindest abschnittsweise bedeckt und sich die Druckfarbe über einem nicht von dem Informationsträger (2) bedeckten Abschnitt der Oberfläche des Geschirrteils (1) erstreckt.

## Claims

1. A method of connecting an item of dishware (1) to a contactlessly readable electronic information carrier (2) comprising the steps:
providing the item of dishware (1), wherein the item of dishware (1) is composed of a material selected from a group consisting of glass, ceramic and plastic or a combination thereof, and
attaching the information carrier (2) to the item of dishware (1),
**characterised in that** the method further comprises the step:
applying a cover layer (3) of printing ink in such a way that the cover layer at least portion-wise covers a surface of the information carrier (2) and the cover layer (3) extends over a portion, which is not covered by the information carrier (2), of a surface of the item of dishware (1).

2. A method according to claim 1 **characterised in that** the application of the cover layer (3) includes applying the cover layer (3) by printing or transferring the cover layer (3) in the form of a printed transfer image.

3. A method according to claim 1 or claim 2 **characterised in that** the printing ink of the cover layer (2) is printed on to the surface of the information carrier (2) with a thickness of at least 100 µm, preferably a thickness of at least 200 µm and particularly preferably a thickness of at least 250 µm.

4. A method according to one of the preceding claims **characterised in that** the information carrier (2) has a first and a second surface (6, 7), wherein a portion of the information carrier (2) projects with respect to the first surface (6), wherein the information carrier (2) is attached to the item of dishware (1) in such a way that the cover layer (3) is in engagement with the first surface (6) and the portion of the information carrier (2), that projects with respect to the first surface (6).

5. A method according to one of the preceding claims **characterised in that** there is provided an item of dishware (1) having a receiving portion at least for a portion of the information carrier (2) in the form of a depression (15) or groove in the surface of the item of dishware (1).

6. A method according to one of the preceding claims **characterised in that** the method further includes the step of applying a carrier layer (9) of printing ink to a surface of the item of dishware (1), wherein the information carrier (2) is applied to the carrier layer (9).

7. A method according to one of the preceding claims **characterised in that** a base surface of the information carrier (2) is smaller than an area of the carrier layer (9), wherein the cover layer (3) is applied in such a way that the cover layer (3) at least portion-wise covers the carrier layer (9).

8. A method according to one of the preceding claims **characterised in that** the method further includes the step:
applying a frame (10) of printing ink to the surface of the item of dishware (1) or to a carrier layer (2) of printing ink so that the frame (10) leaves out an area which is at least as large as a base surface of the information carrier (2),
wherein the cover layer (3) is applied in such a way that it at least portion-wise respectively covers the surface of the information carrier (2) and the surface of the frame (10).

9. A method according to one of the preceding claims **characterised in that** the cover layer (3) completely covers the frame (10).

10. A method according to one of the preceding claims **characterised in that** application of the carrier layer (9) and/or the frame (10) and/or the cover layer (3) is effected by printing using screen printing, wherein the printing ink is a screen printing ink.

11. A method according to one of the preceding claims **characterised in that** the printing ink of the carrier layer (9) and/or the frame (10) is a ceramic printing ink, wherein after application of the carrier layer (9) and/or the frame (10) and prior to attachment of the information carrier (2) the ceramic printing ink is fired.

12. A method according to one of the preceding claims **characterised in that** the printing ink of the carrier layer (9) and/or the frame (10) and/or the cover layer (3) is an organic printing ink.

13. A method according to one of the preceding claims **characterised in that** the printing ink is hardened by the action of UV radiation and/or by heating the printing ink to a temperature of 70°C or less, preferably 60°C or less and particularly preferably 50°C or less.

14. A method according to one of the preceding claims **characterised in that** the cover layer (3) is applied by printing with a printing head (15) of a printing apparatus, wherein the printing head (15) and the item of dishware (1) are moveable relative to each other, wherein after attachment of the information carrier (2) and prior to printing of the cover layer (3) a position of the printing head (15) is set relative to the information carrier (2) with the steps:
reading out the information carrier (2) with a reading device (16),
detecting a signal strength of a signal transmitted from the information carrier (2) to the reading device (16),
determining a position of the information carrier (2) relative to the reading device (16) from the signal strength and
changing the position of the information carrier (2) by movement of the item of dishware (1) with the information carrier (2) relative to the reading device (16) so that the region to be overprinted with the cover layer (3) is under the printing head (15).

15. An arrangement comprising
an item of dishware (1) comprising a material selected from a group consisting of glass, ceramic and plastic or a combination thereof, and
a contactlessly readable electronic information carrier (2) attached to the item of dishware (1),
**characterised in that**
the arrangement has a cover layer (3) of printing ink,
wherein the cover layer (3) at least portion-wise covers a surface of the information carrier (2) and the printing ink extends over a portion, which is not covered by the information carrier (2), of the surface of the item of dishware (1).

## Revendications

1. Procédé de liaison d'une pièce de vaisselle (1) à un support d'informations électronique (2) pouvant être lu sans contact, comprenant les étapes consistant à
mettre à disposition la pièce de vaisselle (1), la pièce de vaisselle (1) étant constituée d'un matériau choisi dans un groupe constitué par le verre, la céramique et le plastique ou une combinaison de ceux-ci, et
mettre en place le support d'informations (2) au niveau de la pièce de vaisselle (1),
**caractérisé en ce que** le procédé présente en outre l'étape consistant à appliquer une couche de revêtement (3) constituée d'encre d'imprimerie de telle manière que la couche de revêtement recouvre au moins par sections une surface du support d'informations (2) et que la couche de revêtement (3) s'étend au-dessus d'une section d'une surface de la pièce de vaisselle (1) non recouverte par le support d'informations (2).

2. Procédé selon la revendication 1, **caractérisé en ce que** l'application de la couche de revêtement (3) comprend une impression de la couche de revêtement (3) ou un transfert de la couche de revêtement (3) sous la forme d'une image de transfert imprimée.

3. Procédé selon la revendication 1 ou 2, **caractérisé en ce que** l'encre d'imprimerie de la couche de revêtement (3) est appliquée sur la surface du support d'informations (2) selon une épaisseur d'au moins 100 µm, de manière préférée selon une épaisseur d'au moins 200 µm et de manière particulièrement préférée selon une épaisseur d'au moins 250 µm.

4. Procédé selon l'une des revendications précédentes, **caractérisé en ce que** le support d'informations (2) présente une première et une seconde surfaces (6, 7), une section du support d'informations (2) dépassant de la première surface (6), le support d'informations (2) étant mis en place au niveau de la pièce de vaisselle (1) de telle manière que la couche de revêtement (3) est en prise avec la première surface (6) et avec la section du support d'informations (2) qui dépasse de la première surface (6).

5. Procédé selon l'une des revendications précédentes, **caractérisé en ce que** l'on met à disposition une pièce de vaisselle (1) qui présente une section de réception au moins d'une section du support d'informations (2) sous la forme d'un renfoncement (15) ou d'une rainure dans la surface de la pièce de vaisselle (1).

6. Procédé selon l'une des revendications précédentes, **caractérisé en ce que** le procédé présente en outre l'étape consistant à appliquer une couche de support (9) constituée d'encre d'imprimerie sur une surface de la pièce de vaisselle (1), le support d'informations (2) étant appliqué sur la couche de support (9).

7. Procédé selon l'une des revendications précédentes, **caractérisé en ce qu'**une surface de base du support d'informations (2) est plus petite qu'une surface de la couche de support (9), quoi la couche de revêtement (3) étant appliquée de telle manière que la couche de revêtement (3) recouvre au moins par sections la couche de support (9).

8. Procédé selon l'une des revendications précédentes, **caractérisé en ce que** le procédé présente en outre l'étape consistant à appliquer un cadre (10) constitué d'encre d'imprimerie sur la surface de la pièce de vaisselle (1) ou sur une couche de support (9) constituée d'encre d'imprimerie, de sorte que le cadre (10) évite une surface au moins aussi grande qu'une surface de base du support d'informations (2), suite à quoi la couche de revêtement (3) est appliquée de telle manière qu'elle recouvre respectivement au moins par sections la surface du support d'informations (2) et la surface du cadre (10).

9. Procédé selon l'une des revendications précédentes, **caractérisé en ce que** la couche de revêtement (3) recouvre entièrement le cadre (10).

10. Procédé selon l'une des revendications précédentes, **caractérisé en ce que** l'application de la couche support (9) et/ou du cadre (10) et/ou de la couche de revêtement (3) s'effectue par impression en sérigraphie, l'encre d'imprimerie étant une encre de sérigraphie.

11. Procédé selon l'une des revendications précédentes, **caractérisé en ce que** l'encre d'imprimerie de la couche de support (9) et/ou du cadre (10) est une encre d'imprimerie céramique, l'encre d'imprimerie céramique étant cuite après l'application de la couche de support (9) et/ou du cadre (10) et avant la mise en place du support d'informations (2).

12. Procédé selon l'une des revendications précédentes, **caractérisé en ce que** l'encre d'imprimerie de la couche de support (9) et/ou du cadre (10) et/ou de la couche de revêtement (3) est une encre d'imprimerie organique.

13. Procédé selon l'une des revendications précédentes, **caractérisé en ce que** l'encre d'imprimerie est durcie grâce à l'action d'un rayonnement UV et/ou grâce au chauffage de l'encre d'imprimerie à une température inférieure ou égale à 70 °C, de manière préférée inférieure ou égale à 60 °C et de manière particulièrement préférée inférieure ou égale à 50 °C.

14. Procédé selon l'une des revendications précédentes, **caractérisé en ce que** la couche de revêtement (3) est imprimée avec une tête d'impression (15) d'un dispositif d'impression, dans lequel la tête d'impression (15) et la pièce de vaisselle (1) sont mobiles l'un par rapport à l'autre, dans lequel une position de la tête d'impression (15) est ajustée par rapport au support d'informations (2) après la mise en place du support d'informations (2) et avant l'impression de la couche de revêtement (3) grâce aux étapes consistant à :
lire le support d'informations (2) avec un appareil de lecture (16),
détecter une intensité de signal d'un signal transmis du support d'informations (2) vers l'appareil de lecture (16),
déterminer une position du support d'informations (2) par rapport à l'appareil de lecture (16) à partir de l'intensité du signal,
modifier la position du support d'informations (2) en déplaçant la pièce de vaisselle (1) avec le support d'informations (2) par rapport à l'appareil de lecture (16) de sorte que la région à surimprimer avec la couche de revêtement (3) se trouve sous la tête d'impression (15).

15. Dispositif, comprenant
une pièce de vaisselle (1) constituée d'un matériau choisi dans un groupe constitué par le verre, la céramique et le plastique ou une combinaison de ceux-ci, et
un support d'informations (2) électronique pouvant être lu sans contact et mis en place au niveau de la pièce de vaisselle (1),
**caractérisé en ce que**
le dispositif présente une couche de revêtement (3) constituée d'encre d'imprimerie,
la couche de revêtement (3) recouvrant au moins par sections une surface du support d'informations (2) et l'encre d'imprimerie s'étendant sur une section de la surface de la pièce de vaisselle (1) non recouverte par le support d'informations (2).
